# EUROPEAN PATENT APPLICATION

(11) **EP 0 525 755 A1**
(43) Date of publication of application: **03.02.1993**
(21) Application number: 92112962.3
(22) Date of filing: 29.07.1992
(51) Int. Cl.: G02F 1/1335, G02B 6/04

(54) **Liquid crystal display**

(30) Priority: 30.07.1991 JP 214453/91; 25.09.1991 JP 273060/91
(71) Applicant: NITTO DENKO CORPORATION, Osaka (JP)
(72) Inventor: Umemoto, Seiji, c/o Nitto Denko Corporation, Ibaraki-shi, Osaka (JP); Fujimura, Yasuo, c/o Nitto Denko Corporation, Ibaraki-shi, Osaka (JP); Yamamoto, Suguru, c/o Nitto Denko Corporation, Ibaraki-shi, Osaka (JP); Nakano, Shusaku, c/o Nitto Denko Corporation, Ibaraki-shi, Osaka (JP)
(74) Representative: Grünecker, Kinkeldey, Stockmair & Schwanhäusser Anwaltssozietät

(57) **Abstract**

A liquid crystal display comprising a liquid crystal cell (3) having on at least one side thereof a light guiding sheet (4) in which light paths in the thickness direction are arrayed in the planar direction thereof and, if desired, further having on the side to be viewed a light scattering sheet (6). The liquid crystal display suffers from only small changes in chromaticity with changes in viewing angle and therefore has a widened viewing angle for satisfactory display quality. The viewing angle for satisfactory contrast may be widened by providing the light scattering sheet.

## Description

### FIELD OF THE INVENTION

This invention relates to a liquid crystal display having a widened viewing angle within which a satisfactory display can be obtained.

### BACKGROUND OF THE INVENTION

While liquid crystal displays have enjoyed noticeable improvements in performance, such as broadening of a display area and an increase in display density, the problem remaining unmitigated is narrowness of a viewing angle, particularly a viewing angle in which the display can be seen with satisfactory display characteristics.

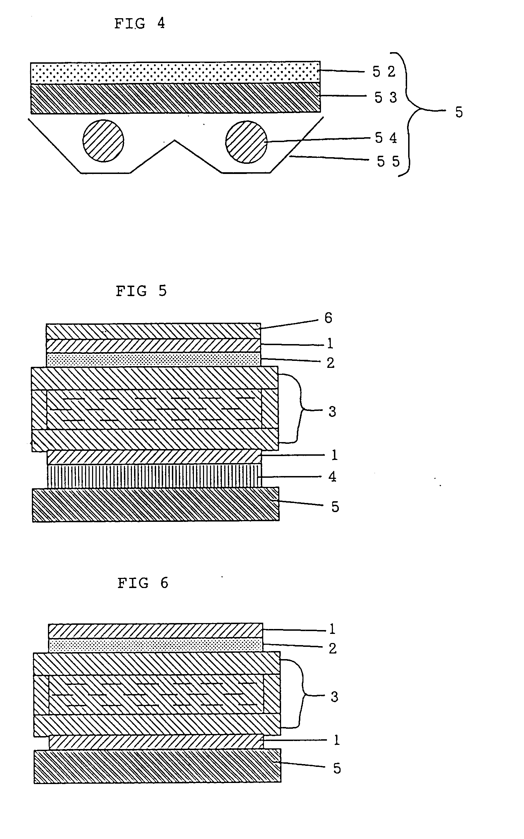

As illustrated in Fig. 6, a known liquid crystal display comprises liquid crystal cell 3 sandwiched in between a pair of polarizers 1 with retarder 2 interposed between one of polarizers 1 and cell 3 and with back light system 5 placed on the other polarizer 1. However, the conventional liquid crystal display cannot get rid of the problems arising from narrowness of the viewing angle in which a satisfactory display can be seen and undergoes considerable changes of the visual chromaticity with changes in viewing angle. That is, the conventional liquid crystal display is disadvantageous in that a display color varies from the central portion to the peripheral portion of the display area, or a black-and-white display assumes a color when viewed at an oblique angle, and the color varies with a viewing direction, or a displayed color is reversed depending on the viewing angle.

Besides the chromaticity problem, there is another problem that a display contrast is reduced with an increase in viewing angle, and it has also been demanded to widen the viewing angle in which a satisfactory contrast can be maintained.

### SUMMARY OF THE INVENTION

An object of the present invention is to provide a liquid crystal display which undergoes no great change in chromaticity with a change of viewing angle and has a wide viewing angle in which satisfactory display characteristics including contrast can be obtained.

The present invention provides a liquid crystal display comprising a liquid crystal cell having on at least one side thereof a light guiding sheet in which light paths in the thickness direction are arrayed in the planar direction thereof and, if desired, further having on the side to be viewed a light scattering sheet.

The light guiding sheet provided on a liquid crystal cell functions to allow transmission of only the light showing satisfactory display characteristics to control chromaticity changes with a viewing angle. As a result, the viewing angle for satisfactory display can be widened, that is, visibility can be improved. The light scattering sheet which may be provided on the side to be viewed functions to widen the image transmission area to thereby broaden a satisfactory contrast range.

### BRIEF DESCRIPTION OF THE DRAWINGS

Figure 1 is a cross section of the liquid crystal display according to a preferred embodiment of the present invention.
Figure 2 is a cross section of a light guiding sheet.
Figure 3 is a cross section of a back light system.
Figure 4 is a cross section of another back light system.
Figure 5 is a cross section of the liquid crystal display according to another preferred embodiment of the present invention.
Figure 6 is a cross section of a conventional liquid crystal display.
Figures 7, 8, and 9 each is a graph showing chromaticity changes of the liquid crystal display of Example 1, Example 2, and Comparative Example 1, respectively.
Figure 10 is a graph showing a contrast ratio of the liquid crystal displays of Examples 1 and 2 and Comparative Example 1.
Figures 11 and 12 each is a cross section of a light guiding sheet.

### PREFERRED EMBODIMENT OF THE INVENTION

Preferred embodiments of the present invention will be explained by referring to the accompanying drawings.

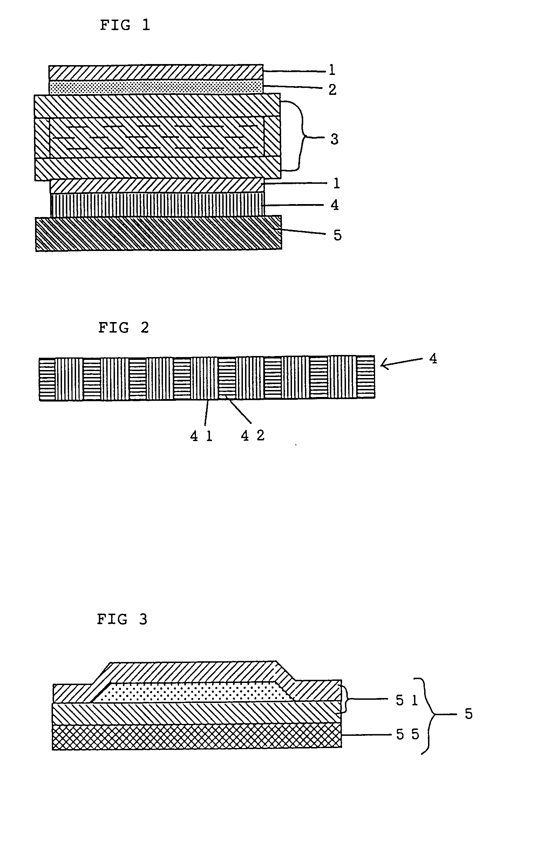

The liquid crystal display having a light guiding sheet on at least one side of a liquid crystal cell is shown in Fig. 1. The display of Fig. 1 comprises a pair of polarizers 1, retarder 2, liquid crystal cell 3, light guiding sheet 4, and back light system 5. Retarder 2 and back light system 5 are optional elements provided if desired. At least one or, if desired, a plurality of light guiding sheets 4 may be provided on either one or both sides of liquid crystal cell 3, i.e., on the side to be viewed and/or the back side. It is necessary to provide the light guiding sheet on the outer side of polarizer 1.

As shown in Fig. 2, in the light guiding sheet, light paths 41 which transmit light in the thickness direction of the sheet are arrayed in the planar direction of the sheet. Light paths 41 have a refractive index gradually decreasing from the center toward the periphery of the sheet. Numeral 42 indicates joints connecting light paths 41.

The light guiding sheet can be formed by using, for example, graded index (GI) fibers as a light-piping material. The fibers which can be used include multi-component quartz fibers and multi-component plastic fibers comprising polymethyl methacrylate, polycarbonate, polyethylene terephthalate, etc. Highly transparent fibers are preferred.

While the refractive index of the light paths, which gradually decreases from the center to the periphery, is not critical, it is preferable that the refractive index decreases by a factor of the square of a distance from the center. The thickness of the light paths is decided appropriately depending on the size of pixels, the condition of use, and the like.

The light guiding sheet can be prepared by, for example, binding a large number of light-piping materials (fibers) into a bundle by any known technique, such as pressure bonding, fusion bonding, or fixing with an adhesive, and cutting the bundle to a prescribed thickness. If desired, the cut surface of the bundle may be subjected to optical polishing.

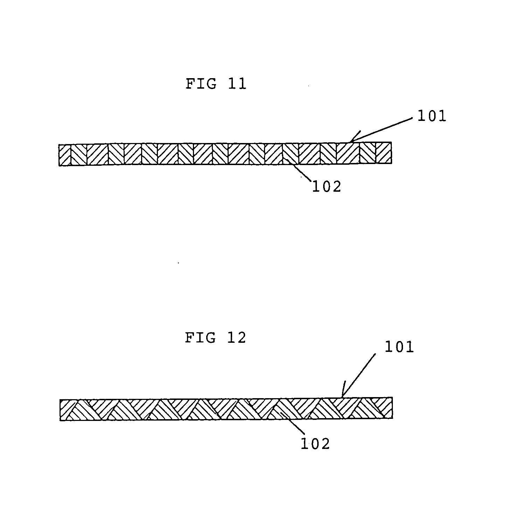

The light guiding sheet according to the present invention may also have a structure comprising a base sheet having a plurality of through-holes in which a transparent polymer is filled. Examples of the light guiding sheet of this type are shown in Figs. 11 and 12, in which 101 is a base sheet, and 102 is a transparent polymer.

The base sheet may be made of transparent, colored, or opaque materials, typically plastics.

The base sheet having a plurality of through-holes can be prepared by an appropriate technique, such as a method of exposing a positive or negative photoresist to light through a perforated mask followed by development, a method of ab- ration using an excimer laser, etc. for making through-holes, and a mechanical method of using a perforator. The size of the opening of through-holes usually ranges from 5 /1.m to 5 mm.

The shape of the through-holes is arbitrary. For example, the openings may have a circular shape, an ellipsoidal shape, a regular polygonal shape, or a rectangular shape. The cross section of the through-holes in the thickness direction may be rectangular (Fig. 11) or may be tapered (Fig. 12). A shape or structure which allows efficient intake of incident light is preferred.

The opening ratio of the base sheet, i.e., an area ratio of the openings of the through-holes in the total base sheet area is preferably from 20 to 99% on at least one side of the sheet, and more preferably at least 50% on the incident light side, from the standpoint of effective intake of incident light and control of the light having passed through the through-holes. In order to prevent transmission of undesired light, a reflecting layer or a black- colored layer may be provided on the incident light side of the base sheet or on the inner wall of the through-holes. Such a layer may be formed by metallizing or coating of a colored resin.

In the through-holes of the base sheet, at least one kind of a transparent polymer is filled. In order to make the filled transparent polymer a substantial light path, the refractive index of the transparent polymer differs from that of the base sheet, and the difference is preferably that the refractive index of the transparent polymer is greater than that of the base sheet by 0.001 to 0.5. While the polymer to be used is not particularly limited, those having high transparency, such as acrylic polymers, polycarbonates, and polyesters, are desirable. Photosensitive resins curable by irradiation with actinic rays, such as ultraviolet rays, are also employable.

The light paths made of the transparent polymer may have a uniform refractive index over the entire area of the light guiding sheet, but preferably have a refractive index gradually decreasing from the central portion to the peripheral portion of the light paths by filling a solution containing, for example, at least two kinds of copolymerizable monomers and a polymerization initiator in the through-holes and selectively polymerizing the solution from the wall portions of the through-holes successively by an additional means such as actinic ray or heat. Refractive index gradation can be obtained by, for example, using two or more kinds of transparent polymers different in refractive index and gradually increasing the proportion of the polymer of higher refractive index from the periphery toward the center. The exposed surface of the transparent polymer in the through-holes may be flat or curved to form a convex or a concave.

The transparent polymer can be filled in the through-holes by, for example, coating a liquid transparent polymer onto the base polymer to fill the through-holes and then solidifying the filled polymer, or dropping a liquid transparent polymer into the individual through-holes followed by solidification.

For example, in the case of tapered light paths as shown in Fig. 12, the light transmitted through the paths forms point sources gathered in a plane irrespective of the properties of the incident light. In this case, an array of lenses may be set on the light outlet side in agreement with the individual point sources of light in accordance with the focal length to convert the point sources to planar parallel light rays. Such an array of lenses may be obtained as a sheet in which convex lenses are formed at the positions corresponding to the individual point sources. The above-described system for forming parallel rays achieves a markedly higher utilization of light than a parallel rays formation system using a honeycomb sheet, and provides a brighter light source.

The thickness of the light guiding sheet is not particularly limited, but is generally from 5 /1.m to 10 mm. The thinner, the better for satisfying the demand for thinness and lightness of liquid crystal display devices. The light-piping state can be controlled by changing the thickness or array density of the light paths, the refractive indices of the light paths in the central portion and the peripheral portion, the thickness of the light guiding sheet, and so on.

Other elements constituting the liquid crystal display of the present invention, such as a liquid crystal cell and a polarizer, are not particularly limited.

Generally employed liquid crystal cells include a twisted nematic (TN) mode cell, a super-twisted nematic (STN) mode cell, a homogeneous cell, and a thin film transistor (TFT) type cell. The driving system may be an active matrix system and a single matrix system.

Generally employed polarizers include a polarizing film prepared by treating a film made of a hydrophilic polymer, e.g., polyvinyl alcohol, with a dichroic dye, e.g., iodine, followed by orientation, a polarizing film prepared by treating a plastic film, e.g., polyvinyl chloride, to orientate a polyene, and such a polarizing film covered with a protective film. The polarizer is provided on either one or both sides of the liquid crystal cell.

If desired, the liquid crystal display of the present invention may have a retarder for the purpose of compensating birefringence of the light transmitted through the cell. A retarder to be used includes a birefringent film obtained by uniaxially or biaxially stretching a polymer film or a laminate thereof.

The liquid crystal display may further have a back light system for the purpose of improving contrast, and the like. Structures of generally employed back light systems are illustrated in Figs. 3 and 4, in which 51 is a planar back light, 52 is a light scattering plate, 53 is a light distributor, 54 is a cold cathode tube, and 55 is a reflecting plate.

As shown in Fig. 5, the liquid crystal display may furthermore have light scattering sheet 6 on the side to be viewed. The kind of the material or structure of the light scattering sheet is properly selected without particular restriction. Suitable materials for the light scattering sheet include a synthetic resin matrix having dispersed therein inorganic fine powders, such as glass powder, or organic fine powders, such as a resin powder. An arbitrary number of the light scattering sheets may be provided on either one or both of the side to be viewed and the opposite side.

Light guiding sheet 4 or light scattering sheet 6 may be firmly fixed to the liquid crystal display according to necessity. In general, it is preferably fixed from the standpoint of suppressing display quality reductions due to interfacial reflection. Fixing of these sheets can be carried out with, for example, a transparent adhesive or self-adhesive. The adhesives or self-adhesives to be used are not particularly limited. It is recommended to use an adhesive, etc. whose refractive index is the same as or close to that of an adherent. Further, an adhesive, etc. to be used is preferably selected from those requiring no high temperature or no long time for curing or drying so as not to cause changes of optical characteristics of an adherent.

The present invention is now illustrated in greater detail with reference to Examples, but it should be understood that the present invention is not construed as being limited thereto.

### EXAMPLE 1

Uncoated GI type quartz optical fibers (fineness: 500 /1.m; refractive index: 1.52 (center), 1.50 (periphery)) were tightly bound into a bundle and fixed with an epoxy resin. The fiber bundle was cut, and the both cut surfaces were optically polished to obtain a 6 mm thick light guiding sheet. The resulting light guiding sheet was placed between a liquid crystal cell and a back light system to obtain a liquid crystal display of Fig. 1. The liquid crystal cell used here was an STN liquid crystal cell having on one side thereof a polarizer via a retarder for black-and-white display compensation and on the other side thereof another polarizer.

### EXAMPLE 2

A liquid crystal display of Fig. 5 was prepared in the same manner as in Example 1, except that a light scattering sheet comprising a polyester resin having dispersed therein glass powder was provided on the side to be viewed.

### COMPARATIVE EXAMPLE 1

The same liquid crystal display as in Example 1 was used as such except for using no light guiding sheet (Fig. 6).

### Evaluation:

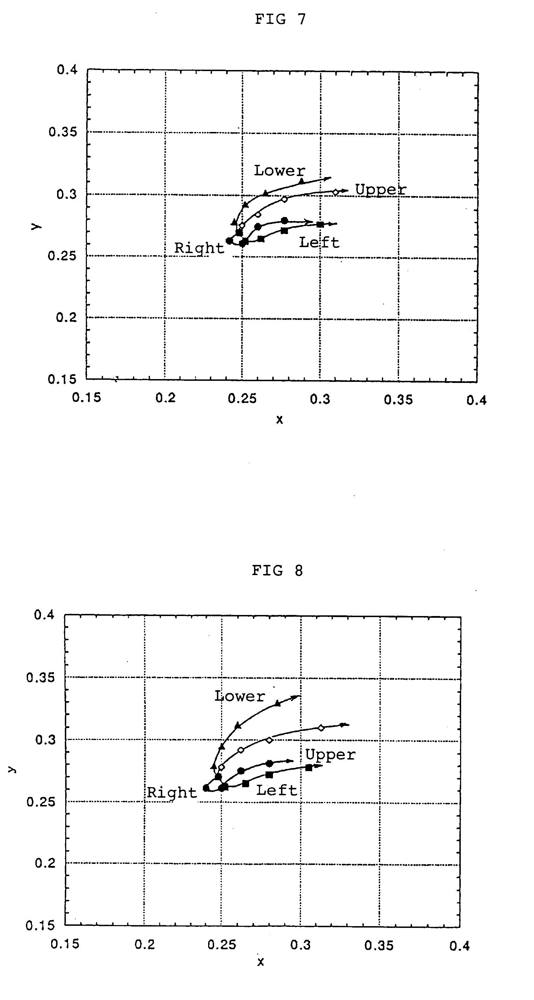

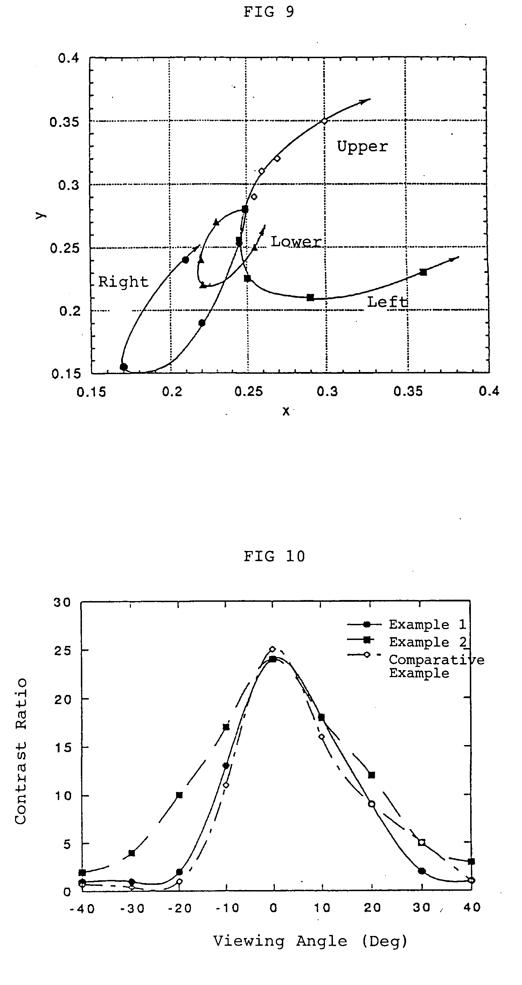

Each of the liquid crystal displays obtained in Examples 1 and 2 and Comparative Example 1 was evaluated for its change in chromaticity with a viewing angle varied in the horizontal direction and the vertical direction with no voltage applied. The data obtained were plotted for every 10 of the viewing angle in Fig. 7 (Example 1), Fig. 8 (Example 2), and Fig. 9 (Comparative Example 1).

Further, the contrast ratio of each display was measured with a viewing angle varied in the horizontal direction. The results obtained are shown in Fig. 10.

From Figs. 7 to 9, it is seen that the displays of Examples 1 and 2 are less liable to changes in chromaticity with a viewing angle than that of Comparative Example. It is also seen from Fig. 10 that the display of Example 2 which additionally has a light scattering sheet exhibits widening of a viewing angle range for a satisfactory contrast ratio.

### EXAMPLE 3

A 300 /1.m thick base sheet comprising polymethyl methacrylate (refractive index: 1.49) was exposed to pulses of an excimer laser via a perforated mask to form tapered through-holes having an opening diameter of 100 /1.m on the light inlet side (incident light side) and an opening diameter of 10 um on the light outlet side at a pitch (on the light inlet side) of 150 /1.m. A polycarbonate resin (refractive index: 1.59) was filled in the thus formed through-holes by coating to obtain a light guiding sheet.

### EXAMPLE 4

Example 3 was followed except that in place of the polycarbonate, a solution containing a mixture (weight ratio 3:1) of methyl methacrylate/benzyl methacrylate (refractive index: 1.57) and benzoyl peroxide was filled and heated to selectively polymerize the methyl methacrylate from the hole wall portions, thereby obtaining a light guiding sheet having a refractive index distribution that the refractive index gradually decreases from the central portion toward the peripheral portion.

### EXAMPLE 5

A light guiding sheet was prepared in the same manner as in Example 4, except for using a 2 mm thick base sheet made of polymethyl methacrylate which had through-holes having a rectangular cross section and an opening of 0.2 mm at a pitch of 0.3 mm.

Each of the light guiding sheets obtained in Examples 3 and 4 was placed on a planar light source emitting scattered light rays with the side of the light guiding sheet having a smaller through- hole opening up, and the light emitted from the sheet was observed from the upside. It was confirmed that strong light was emitted from the polymer-filled through-holes as point sources. When an array of lenses corresponding to light paths is set on the light outlet side to obtain parallet light rays, and the liquid crystal cell and the light scattering sheet are successively placed thereon, widening of a viewing angle was observed.

Further, the polarizer was set on the light outlet side of the light guiding sheet obtained in Example 5 and the light scattering sheet was also placed on the polarizer. As a result, contrast decrease and color change were small, and excellent visual characteristics could be obtained.

According to the present invention, the light guiding sheet reduces changes of chromaticity with a viewing angle to provide a liquid crystal display having a widened viewing angle for satisfactory display quality, i.e., exhibiting excellent visibility. Additional use of a light scattering light brings about widening of the viewing angle for satisfactory contrast to further improve visibility.

While the invention has been described in detail and with reference to specific examples thereof, it will be apparent to one skilled in the art that various changes and modifications can be made therein without departing from the spirit and scope thereof.

## Claims

1. A liquid crystal display comprising a liquid crystal cell having on at least one side thereof a light guiding sheet in which light paths in the thickness direction are arrayed in the planar direction thereof.

2. A liquid crystal display as claimed in Claim 1, wherein said light paths have a refractive index decreasing from the central portion to the peripheral portion of the light paths.

3. A liquid crystal display as claimed in Claim 2, wherein said refractive index decreases by a factor of the square of a distance from the center of the light paths.

4. A liquid crystal display as claimed in Claim 1, wherein said light guiding sheet is composed of a base sheet having a plurality of through-holes having filled therein at least one transparent polymer having a different refractive index from that of said base sheet.

5. A liquid crystal display as claimed in Claim 4, wherein the refractive index of said transparent polymer is greater than that of the base sheet by 0.001 to 0.5.

6. A liquid crystal display as claimed in Claim 1, wherein said display further has a light scattering sheet on the side to be viewed.

7. A liquid crystal display comprising a liquid crystal cell sandwiched in between a pair of polarizers, in which a light guiding sheet having light paths in the thickness direction arrayed in the planar direction thereof is provided on the outer side of at least one of the polarizers.
